**Europäisches Patentamt**

(19) **European Patent Office**

**Office européen des brevets**

(11) Veröffentlichungsnummer: **0 011 242**
**B1**

(12) **EUROPÄISCHE PATENTSCHRIFT**

(45) Veröffentlichungstag der Patentschrift:
02.11.83

(51) Int. Cl.³: **B 29 B 1/04,** C 08 J 3/20,
C 08 L 23/02, C 08 K 7/16

(21) Anmeldenummer: **79104390.4**

(22) Anmeldetag: **08.11.79**

(54) **Verfahren zum Herstellen kleinteiliger, mit globulären Additiven versehener Polyolefin-Formmassen und deren Verwendung zur Herstellung von Formkörpern.**

(30) Priorität: **18.11.78 DE 2850107**

(43) Veröffentlichungstag der Anmeldung:
**28.05.80 Patentblatt 80/11**

(45) Bekanntmachung des Hinweises auf die Patenterteilung:
**02.11.83 Patentblatt 83/44**

(84) Benannte Vertragsstaaten:
**AT BE DE FR GB IT NL**

(56) Entgegenhaltungen:
**DE - B - 1 280 546**
**FR - A - 1 451 293**
**FR - A - 2 310 851**
**GB - A - 1 331 310**
**GB - A - 1 447 304**
**US - A - 4 045 403**

(73) Patentinhaber: **BASF Aktiengesellschaft,
Carl-Bosch-Strasse 38, D-6700 Ludwigshafen (DE)**

(72) Erfinder: **Theysohn, Rainer, Dr. Dipl.-Chem., Bruesseler
Ring 38, D-6700 Ludwigshafen (DE)**
Erfinder: **Zeitler, Gerhard, Dr. Dipl.-Chem.,
Lessingstrasse 11, D-6711 Hessheim (DE)**
Erfinder: **Weiss, Frank, Dr. Dipl.-Ing., Gontardstrasse 4,
D-6800 Mannheim 1 (DE)**
Erfinder: **Seiler, Erhard, Dr. Dipl.-Chem., Erpolzheimer
Strasse 1, D-6700 Ludwigshafen (DE)**

ACTORUM AG

Verfahren zum Herstellen kleinteiliger, mit globulären Additiven versehener Polyolefin-Formmassen und deren Verwendung zur Herstellung von Formkörpern

Die Erfindung betrifft ein Verfahren zum Herstellen kleinteiliger, mit globulären Additiven versehener Polyolefin-Formmassen, die aufgebaut sind aus

a) 100 Gew.-Teilen eines kleinteiligen, teilkristallinen Polyolefins, das einen mittleren Teilchendurchmesser im Bereich von 10 bis 5000 µm hat und eine Grenzviskosität $[\eta]$, gemessen in Decalin bei 130°C, im Bereich von 0,5 bis 15 aufweist,

b) 2 bis 150 Gew.-Teilen eines globulären Additivs, das einen mittleren Teilchendurchmesser von 0,001 bis 200 µm hat und jeweils kleiner als ⅕ des mittleren Teilchendurchmessers des Polyolefins (a) ist, und eine Erweichungstemperatur besitzt, die mindestens 50°C über dem Kristallitschmelzpunkt des Polyolefins liegt sowie

c) — gegebenenfalls — üblichen Mengen üblicher anderer Zusatz- bzw. Hilfsstoffe,

indem man die Komponenten (a) und (b) sowie — gegebenenfalls — (c) in einer ersten Arbeitsstufe (I) in einem Mischer — gegebenenfalls unter Zu- oder Abfuhr kalorischer Wärme — mischt, wobei man sie in einer ersten Unterstufe (I.1) bei einer Mischintensität im Bereich von 100 bis 500 Watt pro Liter Nutzinhalt innerhalb einer Zeitspanne von 2 bis 50 Minuten von Umgebungstemperatur — die unterhalb der Kristallitschmelztemperatur des Polyolefins (a) liegt und insbesondere Raumtemperatur ist — auf die Kristallitschmelztemperatur des Polyolefins (a) bringt, unmittelbar darauf im Verlauf einer zweiten Unterstufe (I.2) auf eine Mischintensität übergeht, die 0,3 bis 0,8 mal so gross ist wie die Mischintensität in der ersten Unterstufe (I.1), und den Mischerinhalt innerhalb einer Zeitspanne von 0,1 bis 20 Minuten von der Kristallitschmelztemperatur des Polyolefins (a) auf eine 3 bis 40°C darüber liegende Temperatur bringt und unmittelbar hiernach in einer zweiten Arbeitsstufe (II) innerhalb einer Zeitspanne von 0,5 bis 30 Sekunden den Mischerinhalt aus dem Mischer austrägt und innerhalb von 120 Sekunden auf eine Temperatur unterhalb der Kristallitschmelztemperatur des Polyolefins (a) bringt.

Bei derartigen ungeformten Polyolefin-Formmassen, die mit Additiven versehen sind, handelt es sich um Massen, die in üblichen Verfahren wie z.B. im Spritzguss oder durch Extrusion zu geformten Polyolefin-Formkörpern, die mit dem Additiv gefüllt sind, verarbeitet werden können.

Die Ausrüstung von Polyolefinmassen mit globulären Additiven, z.B. mit anorganischen Füllstoffen mit kugelförmiger Struktur, ist ein bewährtes Verfahren zur Erzielung günstiger Produkteigenschaften wie grössere Oberflächenhärte, bessere Dimensionsstabilität, geringerer Wärmeausdehnungskoeffizient oder höhere Steifigkeit.

Die Einbringung geeigneter globulärer Additive in Polyolefine geschieht in der Praxis nach zwei Verfahren. Im ersten und am häufigsten angewendeten Fall wird das Additiv auf Extrudern, Innenmischern oder Schneckenknetern in das aufgeschmolzene Polyolefin eingearbeitet. Die so erhaltenen Granulate können dann in einem weiteren Schritt z.B. auf Spritzgussmaschinen zu Formkörpern weiterverarbeitet werden. Nachteile dieses Verfahrens sind einmal der relativ hohe Energieaufwand, der zum Aufschmelzen des Polyolefins und zum Schmelzmischen mit dem Additiv notwendig ist, zum anderen der erhebliche technische und finanzielle Aufwand, der bei der exakten Dosierung und kontinuierlichen Förderung der oftmals zum Stäuben neigenden Additive bei der Einarbeitung getrieben werden muss. Da bei der Einarbeitung zwangsläufig hohe Scherkräfte auftreten, ist dieses Verfahren nicht geeignet bei solchen Polyolefinen, die wegen ihres hohen Molekulargewichts oder wegen partieller Vernetzung durch Scherung geschädigt werden.

Im zweiten Fall geht man von einer weitgehend homogenen mechanischen Trockenmischung aller Komponenten, bestehend aus Polyolefinteilchen und Additiven aus, die nach dem sog. «direct-molding-Verfahren», direkt zu Formkörpern verarbeitet wird. Dieses an sich kostengünstige Verfahren hat allerdings den Nachteil, dass die Homogenität im Fertigteil oftmals unzureichend ist, da Trockenmischungen häufig zur Sedimentation neigen. Zudem erfordert ein solches Verfahren erhebliche Veränderungen an gängigen Spritzgussmaschinen zur Erzielung halbwegs befriedigender Ergebnisse.

Aus der GB-A-1447304 ist ein Verfahren zum Herstellen von mit globulären oder blättchenförmigen Additiven versehenen Polyolefingranulaten bekannt, bei dem Polyolefinteilchen mit einer durchschnittlichen Partikelgrösse von beispielsweise 150 µm mit globulären oder blättchenförmigen Additiven mit durchschnittlichen Partikelgrössen von 50 µm vermischt werden, wobei 10 bis 80 Gew.-% des Additivs angewendet werden. Die Vermischung selbst erfolgt in zwei Stufen, wobei in der ersten Stufe gemäss Beispiel 2 im Falle von Niederdruckpolyethylenpulver auf ca. 130°C bei hoher Mischintensität erhitzt wird und anschliessend in einer zweiten Stufe bei halber Mischintensität die Temperatur auf 140°C eingestellt wird. Anschliessend wird die Mischung in einen gekühlten Mischer geschüttet und unter Rühren abgekühlt. Bei diesem bekannten Verfahren wird ein Endprodukt erhalten, das einen erheblich höheren Partikeldurchmesser aufweist als das Ausgangsprodukt, nämlich 500 µm bis 20 mm.

Das bekannte Verfahren weist den Nachteil auf, dass die Partikelchen während der Beladung mit Füllstoffen stark anwachsen und agglomerieren, so dass die Weiterverarbeitung des Ausgangs- und des Endproduktes nicht auf gleichen Maschinen bei vergleichbarem Einzugsverhalten und vergleichbaren Zykluszeiten erfolgen kann.

Aufgabe war es daher, ein kostengünstiges, apparativ einfaches und exaktes Verfahren zum Einbringen von globulären Additiven in kleinteilige Polyolefin-Formmassen zu entwickeln, das die Nachteile des aus der GB-A-1447304 bekannten Verfahrens vermeidet und zu kleinteiligen gefüllten Formmassen führt, die in der Korngrössenverteilung dem eingesetzten feinteiligen Polymeren entsprechen.

Die Aufgabe wurde erfindungsgemäss dadurch gelöst, dass man in einer dritten Unterstufe (I.3) auf eine Mischintensität übergeht, die 0,5 bis 1,0 mal so gross ist wie die Mischintensität in der zweiten Unterstufe (I.2) und den Mischerinhalt für eine Zeitspanne von 0,2 bis 10 Minuten auf der in Unterstufe (I.2) erreichten Temperatur hält.

Nach bevorzugtem Verfahren wird im Verlauf der zweiten Unterstufe (I.2) und/oder dritten Unterstufe (I.3) 0,5 bis 30 Gew.-%, bezogen auf die Gesamtmenge, der Komponente (b) in den Mischer zugegeben.

Unter kleinteiligen, teilkristallinen Polyolefinen (a) werden solche verstanden, die einen Teilchendurchmesser im Bereich von 10 bis 5000, vorzugsweise 100 bis 2000 µm aufweisen und deren Grenzviskosität [$\eta$] (gemessen nach DIN 53728 in Decalin bei 130°C) im Bereich von 0,5 bis 15, vorzugsweise 1 bis 10 liegt. Bei den Polyolefinen handelt es sich vorzugsweise um Polyethylen hoher Dichte (0,93 bis 0,97 g/cm³) und um Polypropylen, insbesondere um ein solches, das nach dem Gasphasen-Verfahren, wie z.B. in der DE-B-1217071 beschrieben, hergestellt wurde, Copolymere von Ethylen und Propylen, sofern sie noch kristalline Anteile enthalten, sowie um entsprechende Polymere, die bis zu 5 Gew.-% Acrylsäure aufgepfropft enthalten.

Unter teilkristallinen Polyolefinen seien solche verstanden, die bei der DSC-Analyse zumindest einen scharfen Schmelzpeak aufweisen.

Die globulären Additive (b) sollen einen mittleren Teilchendurchmesser aufweisen von 0,001 bis 200 µm, vorzugsweise 0,01 bis 50 µm, und der mittlere Teilchendurchmesser soll kleiner als $\frac{1}{5}$, vorzugsweise kleiner als $\frac{1}{10}$ des mittleren Teilchendurchmessers des Polyolefins (a) sein. Zudem sollen sie einen Schmelz- bzw. Erweichungsbereich besitzen, der mindestens 50°C über dem Kristallitschmelzpunkt des Polyolefins liegt. Die Bezeichnung «globulär» bedeutet nicht, dass die Additive nur kugelförmige Gestalt aufweisen; sie stellt vielmehr eine Abgrenzung gegenüber faserförmigen und blättchenförmigen Additiven dar. In Frage kommen z.B. Kreide, Quarz, amorphes $SiO_2$, Glaskugeln aus A-, E- und Mineralgas, Hohlglaskugeln, Glasmehl, calcinierter Kaolin, Bariumsulfat, Calciumsulfat, Aluminiumoxid, Aluminiumoxyhydrat, Aluminiumhydroxid, Titandioxid, Zinksulfid, Polytetrafluorethylen-, Polyamid- und Polyesterpulver.

Als Hilfs- und Zusatzstoffe (c) kommen in Frage: anorganische und organische Farbpigmente, Stabilisatoren, Verarbeitungshilfsmittel wie Gleit- und Entformungsmittel, Haft- und Verträglichkeitsvermittler und Treibmittel.

Die Herstellung der Formmassen kann erfolgen in einem Mischer, in dem die Mischflügel senkrecht zur Mischerachse angeordnet sind, wie er z.B. in der DE-B-1054073 oder DE-B-1454768 beschrieben ist. Derartige Mischer wurden bisher hauptsächlich zur Aufbereitung von nichtkristallinen Thermoplasten mit breitem Erweichungsbereich, wie PVC oder auch ABS, eingesetzt. Sie sind aber auch zum Agglomerieren von schlecht fliessfähigen, feinteiligen Polyolefinen mit breiter Kornverteilung geeignet, wobei ein verengtes gröberes Kornspektrum und ein höheres Schüttgewicht resultiert, so dass auf diese Weise das Verarbeitungsverhalten verbessert werden kann. Es ist zudem bekannt, dass das Agglomerieren von Kunststoffpartikeln auch in Gegenwart von Zuschlagstoffen geschehen kann. Der Beschreibung der DE-A-2302370 ist zu entnehmen, dass bei der Aufbereitung von Polyolefinpulvern in schnellaufenden Mischern, die maximale Temperatur 2 bis 13°C unterhalb des Schmelzbereichs des Polyolefins liegen sollte, um ein Verkleben bzw. Verklumpen zu vermeiden.

Überraschend wurde nun gefunden, dass es nach dem erfindungsgemässen Verfahren möglich ist, globuläre Additive (b) vollständig und irreversibel an die Polyolefinkomponente zu binden, ohne dass eine nennenswerte Agglomeration oder sogar Klumpenbildung stattfindet. Es resultieren hierbei feinteilige, frei fliessende Formmassen mit ähnlicher Kornverteilung wie das eingesetzte Polymere, die die Additive (b) vollständig gebunden enthalten und die sich leicht zu Formkörpern weiterverarbeiten lassen.

Die anmeldungsgemässe Arbeitsweise besteht bevorzugt darin, dass man in der ersten Stufe (I.1) das Gemisch aus (a), (b) und gegebenenfalls (c) mit einer Mischintensität von 200 bis 400 Watt pro Liter (W/l) Nutzinhalt innerhalb von 5 bis 20 Minuten von Umgebungstemperatur, die üblicherweise Raumtemperatur ist, auf die Kristallitschmelztemperatur des Polyolefins (a) bringt, anschliessend im Verlauf der zweiten Stufe (I.2) auf eine Mischintensität übergeht, die 0,4 bis 0,7 mal so gross ist wie die Mischintensität bei (I.1) und innerhalb einer Zeitspanne von 0,2 bis 10 Minuten von der Kristallitschmelztemperatur des Polyolefins auf eine 5 bis 30°C darüber liegende Temperatur bringt. Anschliessend wird in der zweiten Arbeitsstufe (II) das Produkt innerhalb von 0,5 bis 10 Sekunden aus dem Mischer ausgetragen und auf eine Temperatur unterhalb des Polymerschmelzpunktes abgekühlt.

Erfindungsgemäss schliesst sich an die Stufen I.1 und I.2 eine dritte Stufe (I.3) an, wobei man vorzugsweise auf eine Mischintensität übergeht, die 0,5 bis 0,8 mal so gross ist wie die Mischintensität bei (I.2) und den Mischerinhalt vorzugsweise 0,2 bis 5 Minuten auf der in Stufe (I.2) erreichten Temperatur hält.

Eine bevorzugte Ausführungsform ist die, dass zunächst lediglich 70 bis 99,5% der beabsichtigten Menge an Additiv (b) zusammen mit der Polyolefinkomponente (a) und ggf. die Komponente (c) vorgelegt werden und dass die Restmenge von 0,5 bis 30 Gew.-% (b) im Verlauf der 2. (I.2) und/oder der dritten Unterstufe (I.3) weitgehend kontinuierlich über die Zeit verteilt, zugegeben werden.

Die Mischintensität in W/l Nutzinhalt ist definiert als die Energieaufnahme (in Watt) bezogen auf 1 Liter des Volumens, das die Komponenten (a), (b) und ggf. (c) im Mischer einnehmen.

Das beschriebene Verfahren ist apparativ und energetisch weit weniger aufwendig als z.B. eine Extruderkonfextionierung. Es erlaubt zudem eine einfache und exakte Einbringung der Komponenten Additive und Zuschläge ohne komplizierte Dosiertechnik, zudem staubfrei. Darüber hinaus hat das Verfahren den Vorteil, dass es möglich ist, Füllstoffe in ansonsten schwer verarbeitbare Thermoplaste, wie ultrahochmolekulares Polyethylen, ohne Schädigung der Polymeren einzubringen.

Die kleinteiligen, mit globulären Additiven versehenen Polyolefin-Formmassen können verwendet werden zur Herstellung von Formkörpern nach den üblichen Spritzguss-, Extrusions- oder Hohlkörperblasverfahren.

Das folgende Beispiel verdeutlicht das oben genannte Verfahren:

Beispiel

Ausgangsmaterial ist ein Gemisch aus
a) 20 kg (entsprechend 100 Gew.-Teilen) eines kleinteiligen Polyethylens, das einen Teilchendurchmesser im Bereich von 250 bis 2000 µm hat und eine Grenzviskosität [$\eta$] von 4,8 aufweist.
b) 8,57 kg (entsprechend 42,8 Gew.-Teilen) Glaskugeln aus A-Glas, die einen maximalen Teilchendurchmesser von 60 µm haben und einen mittleren Teilchendurchmesser (= 20 µm) aufweisen, der 1/40 mal so gross wie der mittlere Teilchendurchmesser des Polyethylens (a) ist, sowie
c) 0,2 kg (entsprechend 1 Gew.-Teil) TiO$_2$ und 0,05 kg (entsprechend 0,25 Gew.-Teilen) Irganox 1076 der Firma Ciba-Geigy, Basel, Schweiz (als einschlägig übliche andere Zusatz- bzw. Hilfsstoffe, nämlich Farbpigment und Stabilisator).

Das vorgenannte Gemisch wird
(I) in einer ersten Arbeitsstufe in einem Mischer – ohne äussere Zu- od. Abfuhr kalorischer Wärme –,
(I.1) in einer ersten Unterstufe bei einer Mischintensität von 270 W/l Nutzinhalt innerhalb einer Zeitspanne von 8 Minuten von Umgebungstemperatur (= Raumtemperatur) auf die Kristallitschmelztemperatur des Polyethylens (a) (= ~ 138°C) gebracht; unmittelbar darauf
(I.2) in einer zweiten Unterstufe bei einer Mischintensität die im Mittel 0,61 mal so gross ist wie die Mischintensität in der ersten Unterstufe (I.1), innerhalb einer Zeitspanne von 6 Minuten von Kristallitschmelztemperatur des Polyethylens (a) auf eine 10°C darüber liegende Temperatur (= 148°C) gebracht; unmittelbar hiernach
(I.3) in einer dritten Unterstufe (I.3) bei einer Mischintensität, die 0,6 mal so gross ist wie die Mischintensität in der zweiten Unterstufe (I.2), für eine Zeitspanne von 1,2 Minuten auf der in Unterstufe (I.2) erreichten Temperatur gehalten; und unmittelbar anschliessend
(II) in einer zweiten Arbeitsstufe innerhalb einer Zeitspanne von 5 Sekunden aus dem Mischer ausgetragen und innerhalb von 35 Sekunden auf eine Temperatur (= 90°C) unterhalb der Kristallitschmelztemperatur des Polyethylens (a) gebracht.

Das erhaltene Produkt ist frei fliessend, enthält praktisch keine ungebundenen Glaskugeln und hat die gleiche Kornverteilung wie das eingesetzte feinteilige Polymere.

**Patentansprüche**

1. Verfahren zum Herstellen kleinteiliger, mit globulären Additiven versehener Polyolefin-Formmassen, die aufgebaut sind aus
a) 100 Gew.-Teilen eines kleinteiligen, teilkristallinen Polyolefins, das einen mittleren Teilchendurchmesser im Bereich von 10 bis 5000 µm hat und eine Grenzviskosität [$\eta$], gemessen in Decalin bei 130°C, im Bereich von 0,5 bis 15 aufweist,
b) 2 bis 150 Gew.-Teilen eines globulären Additivs, das einen mittleren Teilchendurchmesser von 0,001 bis 200 µm hat und jeweils kleiner als 1/5 des mittleren Teilchendurchmessers des Polyolefins (a) ist, und eine Erweichungstemperatur besitzt, die mindestens 50°C über dem Kristallitschmelzpunkt des Polyolefins liegt sowie
c) – gegebenenfalls – üblichen Mengen üblicher anderer Zusatz- bzw. Hilfsstoffe,
indem man die Komponenten (a) und (b) sowie – gegebenenfalls – (c) in einer ersten Arbeitsstufe (I) in einem Mischer – gegebenenfalls unter Zu- oder Abfuhr kalorischer Wärme – mischt, wobei man sie in einer ersten Unterstufe (I.1) bei einer Mischintensität im Bereich von 100 bis 500 Watt pro Liter Nutzinhalt innerhalb einer Zeitspanne von 2 bis 50 Minuten von Umgebungstemperatur – die unterhalb der Kristallitschmelztemperatur des Polyolefins (a) liegt und insbesondere Raumtemperatur ist – auf die Kristallitschmelztemperatur des Polyolefins (a) bringt, unmittelbar darauf im Verlauf einer zweiten Unterstufe (I.2) auf eine Mischintensität übergeht, die 0,3 bis 0,8 mal so gross ist wie die Mischintensität in der ersten Unterstufe (I.1), und den Mischerinhalt innerhalb einer Zeitspanne von 0,1 bis 20 Minuten von der Kristallitschmelztemperatur des Polyolefins (a) auf eine 3 bis 40°C darüber liegende Temperatur bringt und unmittelbar hiernach in einer zweiten Arbeitsstufe (II) innerhalb einer Zeitspanne von 0,5 bis 30 Sekunden den Mischerinhalt aus dem Mischer austrägt und innerhalb von 120 Sekunden auf eine Temperatur unterhalb der Kristallitschmelztemperatur des Polyolefins (a) bringt, dadurch gekennzeichnet, dass man in einer dritten Unterstufe (I.3) auf eine Mischintensität übergeht, die 0,5 bis 1,0 mal so gross ist wie die Mischintensität in der zweiten Unterstufe (I.2), und den Mischerinhalt für eine Zeitspanne von 0,2 bis 10 Minuten auf der in Unterstufe (I.2) erreichten Temperatur hält.

2. Verfahren nach Anspruch 1, dadurch gekennzeichnet, dass im Verlauf der zweiten Unterstufe (I.2) und/oder dritten Unterstufe (I.3) 0,5 bis 30 Gew.-%, bezogen auf die Gesamtmenge, der Komponente (b) in den Mischer zugegeben werden.

3. Verwendung kleinteiliger, mit globulären Additiven versehener Polyolefin-Formmassen nach den Ansprüchen 1 und 2 zur Herstellung von Formkörpern nach üblichen Spritzguss-, Extrusions- und Hohlkörperblasverfahren.

## Claims

1. A process for the preparation of a particulate polyolefin molding material containing a globular additive, the molding material comprising
a) 100 parts by weight of a particulate, partially crystalline polyolefin, which has a mean particle diameter of from 10 to 5,000 μm and an intrinsic viscosity [η], measured in decahydronaphthalene at 130°C, of from 0.5 to 15, and
b) from 2 to 150 parts by weight of a globular additive, which has a mean particle diameter of from 0.001 to 200 μm, and is in every instance less than ⅕ of the mean particle diameter of the polyolefin (a), and has a softening point at least 50°C above the crystallite melting point of the polyolefin, with or without
c) conventional amounts of other, conventional additives or assistants,
by mixing the components (a) and (b), with or without (c), in a first process step (I), in a mixer, with or without the supply or removal of caloric heat, the said step (I) comprising a sub-step (I.1) in which the mixture is brought within a period of from 2 to 50 minutes from ambient temperature, which is below the crystallite melting point of the polyolefin (a) and in particular is room temperature, to the crystallite melting point of the polyolefin (a) whilst being subjected to a mixing intensity of from 100 to 500 W/liter of useful mixer capacity, which sub-step is followed immediately by a second sub-step (I.2) in the course of which the mixing intensity is brought to a value which is 0.3 to 0.8 times as great as the mixing intensity in the first sub-step (I.1) and the mixture is brought, within a period of from 0.1 to 20 minutes, from the crystallite melting point of the polyolefin (a) to a temperature of from 3 to 40°C above the latter, and immediately thereafter, in a second process step (II), discharging the material from the mixer within a period of from 0.5 to 30 seconds and bringing it, in the course of 120 seconds, to a temperature below the crystallite melting point of the polyolefin (a), wherein, in a third sub-step (I.3), the mixing intensity is brought to a value which is 0.5 to 1.0 times as great as the mixing intensity in the second sub-step (I.2), and the mixture is kept for from 0.2 to 10 minutes at the temperature reached in sub-step (I.2).

2. A process as claimed in claim 1, wherein from 0.5 to 30% by weight, based on the total amount, of component (b) is introduced into the mixer in the course of the second sub-step (I.2) and/or the third sub-step (I.3).

3. The use of a particulate polyolefin molding material containing a globular additive, as claimed in claims 1 and 2, for the production of moldings by conventional injection-molding, extrusion and blow-molding processes.

## Revendications

1. Procédé pour la préparation de matières à mouler polyoléfiniques, contenant des additifs globulaires, en fines particules, composées de:
a) 100 parties en poids d'une polyoléfine partiellement cristallisée en fines particules, dont la granulométrie se situe dans la gamme de 10 à 5000 μm, possédant une viscosité limite [η], mesurée à 130°C dans la décaline, dans la gamme de 0,5 à 15;
b) 2 à 150 parties en poids d'un additif globulaire avec une granulométrie moyenne comprise entre 0,001 et 200 μm et inférieure à ⅕e de la granulométrie moyenne de la polyoléfine (a), cet additif possédant une température de ramollissement d'au moins 50°C supérieure au point de fusion des scristallites de la polyoléfine;
c) éventuellement d'autres additifs et adjuvants usuels en des proportions habituelles,
dans lequel les composantes (a) et (b) et la composante (c) éventuelle sont mélangées dans une première phase opératoire (I) dans un malaxeur, le cas échéant avec apport ou élimination de chaleur, en les portant dans une première sous-phase (I.1), en l'espace de 2 à 50 minutes et avec une intensité du malaxage se situant entre 100 et 500 watts par litre de capacité utile, de la température ambiante — qui est inférieure à la température de fusion des cristallites de la polyoléfine (a) et correspond en particulier à la température ordinaire — à la température de fusion des cristallites de la polyoléfine (a); immédiatement après, dans une deuxième sous-phase (I.2), le contenu du malaxeur est porté en l'espace de 0,1 à 20 minutes et avec une intensité du malaxage correspondant à 0,3 à 0,8 fois l'intensité de malaxage dans la première sous-phase (I.1), de la température de fusion des cristallites de la polyoléfine (a) à une température supérieure de 3 à 40°C, et immédiatement après, dans une deuxième phase opératoire (II), le contenu du malaxeur est évacué de celui-ci en l'espace de 0,5 à 30 secondes et refroidi en l'espace de 120 secondes à une température inférieure à la température de fusion des cristallites de la polyoléfine (a), caractérisé en ce que, dans une troisième sous-phase (I.3), on maintient le contenu du malaxeur pendant 0,2 à 10 minutes à la température atteinte dans la deuxième sous-phase (I.2) sous une intensité du malaxage correspondant à 0,5 à 1,0 fois l'intensité de malaxage dans cette sous-phase (I.2).

2. Procédé suivant la revendication 1, caractérisé en ce que 0,5 à 30% en poids de la quantité totale de la composante (b) sont introduits dans le malaxeur pendant la deuxième sous-phase (I.2) et(ou) la troisième sous-phase (I.3).

3. Utilisation de matières à mouler polyoléfiniques, contenant des additifs globulaires, en fines particules suivant les revendications 1 et 2 pour la fabrication d'objets moulés par les procédés classiques de moulage par injection, d'extrusion et de soufflage de corps creux.